# EUROPÄISCHE PATENTSCHRIFT

(11) **EP 1 995 073 B1**
(45) Veröffentlichungstag und Bekanntmachung des Hinweises auf die Patenterteilung: **21.04.2010**
(21) Anmeldenummer: 08155879.3
(22) Anmeldetag: 08.05.2008
(51) Int. Cl.: B41M 5/24

(54) **Verfahren zum Kennzeichnen extrudierter Kunststoffprofile**
Method for marking extruded plastic profiles
Procédé de caractérisation de profilés en matière synthétique extrudés

(30) Priorität: 24.05.2007 DE 102007024546
(43) Veröffentlichungstag der Anmeldung: 26.11.2008
(73) Patentinhaber: Rehau AG + Co, 95111 Rehau (DE); Photon Energy GmbH, 91242 Ottensoos (DE)
(72) Erfinder: Riedel, Harald, 95194 Regnitzlosau (DE); Weimel, Erich, 91220 Schnaittach (DE); Stadthalter, Peter, 96152 Burghaslach (DE)
(74) Vertreter: Lohr, Georg

(56) Entgegenhaltungen:
- WO-A-2006/067380

## Beschreibung

Die Erfindung betrifft ein Verfahren zum Herstellen eines Kunststoffprofils mit einer Kennzeichnung, die mindestens ein Linienelement hat.

Aus der WO 2006/067380 ist es bekannt ein Polyethylenrohr zu extrudieren und anschließend mit einem Beschriftungslaser einen Barcode als Kennzeichnung auf das Kunststoffrohr aufzubringen. Weil die technisch relevanten Kunststoffe, wie beispielsweise Polyethylen für die üblicherweise verwendeten Beschriftungslaser nahezu transparent sind, wird zu dem Kunststoff ein Additiv, z.B. Titanoxid zugegeben. Bei Bestrahlung mit einem Beschriftungslaser erfolgt durch das Additiv ein Farbumschlag, so dass eine der Strahlführung entsprechende Kennzeichnung auf der Oberfläche des Rohres erzeugt wird. Im Falle des beispielsweise angegebenen Titanoxid erfolgt ein Farbumschlag von weiß nach schwarz.

Ein Kennzeichen setzt sich in der Regel aus einer Vielzahl von Linienelementen zusammen. Diese Linienelemente können beispielsweise Buchstaben, Ziffern oder auch die einzelnen Streifen eines Barcodes sein. Um ein solches Linienelement aufzubringen, wird der Laserstrahl des Beschriftungslasers über die zu beschriftende Oberfläche geführt. Die so erzeugte Linie wird hier Elementarlinie genannt. Oft ist die Elementarlinie jedoch schmaler als das zu erzeugende Linienelement, welches eine gegebene Breite, z.B. 1mm haben soll. Daher wird das Linienelement durch Auftragen mehrerer seitlich etwas gegeneinander versetzter Elementarlinien erzeugt. Ein Linienelement besteht entsprechend aus einer Vielzahl von Elementarlinien. Insbesondere beim Erzeugen von Barcodes kann sich die Länge der Elementarlinien schnell zu einigen Metern aufsummieren.

Die Ablenkgeschwindigkeit des Laserstrahls ist abhängig von dem zu kennzeichnenden Material und der Laserleistung. Übliche Werte liegen bei etwa 2m/s. Die Zeit zum Aufbringen eines Barcodes kann also durchaus einige Sekunden betragen.

Beschriftungslaser werden zumeist gepulst betrieben. Ein Puls eines Beschriftungslasers erzeugt einen sogenannten Brennfleck auf der Oberfläche des Kunststoffprofils. Linienförmiges Aufbringen einer Vielzahl von Brennflecken auf der Oberfläche erzeugt eine Elementarlinie. Die Breite einer Elementarlinie ist deshalb identisch mit dem Durchmesser eines Brennflecks. Nachfolgend werden daher die Begriffe "Durchmesser eines Brennflecks" und "Breite einer Elementarlinie" synonym verwendet.

Der Erfindung liegt die Aufgabe zugrunde ein verbessertes Verfahren zur Herstellung von Kunststoffprofilen mit einem Kennzeichen anzugeben.

Die Aufgabe ist durch ein Verfahren nach dem Anspruch 1 gelöst. Bevorzugte Ausführungsformen sind in den Unteransprüchen angegeben.

Zunächst wird aus einem thermoplastischen Kunststoff ein Kunststoffprofil extrudiert. Das Kunststoffprofil kann beispielsweise ein Hohlprofil, insbesondere ein zylindrisches Rohr sein. Auf einem schon extrudierten Abschnitt des Kunststoffprofils wird bei fortwährender Extrusion mit einem gepulsten Laser ein Kennzeichen mit mindestens einem Linienelement aufgebracht. Das Kennzeichen kann zum Beispiel eine Buchstaben- und/oder Ziffernfolge und/oder einen Barcode enthalten. Anschließend werden die Breiten des zuvor aufgebrachten Linienelementes und der das Linienelement bildenden Elementarlinien gemessen. Darauffolgend wird ein weiteres Kennzeichen mit mindestens einem Linienelement auf einen weiteren Profilabschnitt aufgebracht. Es kann beispielsweise das gleiche Kennzeichen nochmals aufgebracht werden. Dabei werden die Brennflecke zweier benachbarter Elementarlinien aneinandergrenzend nebeneinander aufgebracht, d.h. der Abstand der Mittelpunkte zweier nebeneinander aufgebrachter Brennflecke ist etwa gleich der Breite eines Brennflecks. Die Breite und die Länge eines Linienelementes sind somit nicht im Voraus festgelegt, sondern ergeben sich als Funktion des Durchmessers der Brennflecke.

Der seitliche Versatz der einzelnen Elementarlinien - bzw. deren Brennflecken - zueinander ist bei den Verfahren nach dem Stand der Technik eine Konstante des jeweiligen Beschriftungslasers. Dem erfindungsgemäßen Verfahren liegt die Erkenntnis zugrunde, dass ein und derselbe Beschriftungslaser auf verschiedenen Materialien Elementarlinien verschiedener Breite erzeugt. Gemäß der Erfindung wird die Breite der Elementarlinien gemessen und anhand der Messdaten der Versatz der Elementarlinien zueinander optimiert, so dass eine geringere Anzahl von Elementarlinien zur Erzeugung eines Linienelementes notwendig ist. Die Zeit zum Aufbringen eines Kennzeichens wird entsprechend verkürzt.

Vorzugsweise wird zusätzlich die Breite der Linienelemente eines zuvor aufgebrachten Kennzeichens nach einem Abkühlschritt gemessen und die gemessene Breite der Linienelemente mit je einer Sollbreite, zumeist einem Intervall, verglichen. Bei einer Abweichung von der Sollbreite wird die Anzahl der aneinandergrenzenden Elementarlinien angepaßt, d.h. entweder erhöht oder erniedrigt, bis die Sollbreite erreicht ist. Dadurch können z.B. temperaturbedingte Veränderungen der Linienbreite eines Linienelementes korrigiert werden, beispielsweise um eine zur Erfassung mit einem Sensor notwendige Linienbreite sicherstellen.

Vorzugsweise wird Vorschubgeschwindigkeit des Kunststoffprofils gemessen. Bei der Ansteuerung des Beschriftungslasers wird dann die Vorschubgeschwindigkeit berücksichtigt und kompensioert. Dadurch wird verhindert, daß der Vorschub das Kennzeichen beeinflußt. Die Linienelemente erscheinen nicht verzerrt. Insbesondere können die Kennzeichen beispielsweise rechtwinklig zum Vorschub aufgebracht werden.

Natürlich können mit dem beschriebenen Verfahren auch Kennzeichen aufgebracht werden, die Buchstaben und/oder Ziffern enthalten, denn auch Buchstaben und Ziffern lassen sich aus Elementarlinien, bzw. aneinandergereihten Brennflecken zusammensetzen.

Anhand der schematisch vereinfachten Zeichnung wird die Erfindung näher erläutert. Es zeigt:
- Fig. 1:: Eine Anlage zur Herstellung beschrifteter Kunststoffprofile.
- Fig. 2:: Einen Barcode auf einem gemäß dem Stand der Technik hergestellten Kunststoffprofil.
- Fig. 3a-3c:: Barcodes auf einem erfindungsgemäß hergestellten Kunststoffprofil.
- Fig. 4:: Die Intensitätsverteilung eines Laserstrahls eines Beschriftungslasers.

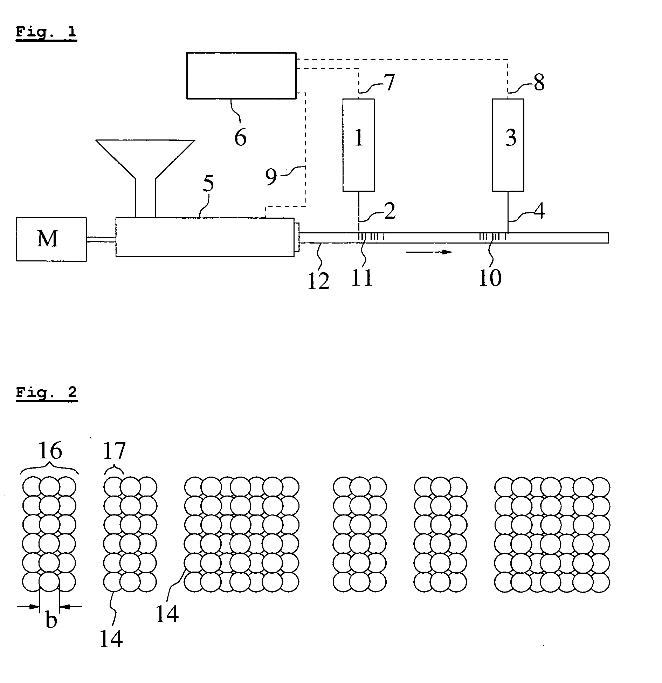

Die in Fig. 1 dargestellte Anlage hat einen von einem Motor M angetriebenen Schneckenextruder 5 zur Extrusion eines Kunststoffprofils 12. Das Kunststoffprofil zeigt bei Bestrahlung mit einem Beschriftungslaser (1) einen Farbumschlag. Dazu kann es - je nach Kunststoff und verwendeter Wellenlänge- notwendig sein dem Kunststoff ein Additiv zugegeben. Es ist auch möglich mittels Coextrusion ein Kunststoffprofil aus mehreren Kunststoffen zu extrudieren. Beispielsweise kann das Kunststoffprofil ein für den Laser im wesentliches transparentes Rohr sein, daß einen mit Titanoxid versetzten Streifen hat.

Auf das Kunststoffprofil 12 wird mittels des gepulsten Beschriftungslasers 1 mit einem Laserstrahl 2 ein Kennzeichen mit mindestens einem Linienelement, hier ein Barcode 11, aufgebracht. Die Breite der Elementarlinien des Barcodes 11 wird anschließend von einem Sensor 3, beispielsweise einem Scanner, gemessen. Die Meßwerte des Sensors 3 werden über eine Datenleitung 8 an eine Maschinensteuerung 6 übermittelt. Die Maschinensteuerung 6 ist über weitere Datenleitungen 9 und 7 mit dem Extruder 5 bzw. mit dem Beschriftungslaser 1 verbunden. Über die Datenleitungen 9 und 7 kann die Maschinensteuerung weitere Sensoren, wie beispielsweise Sensoren für die Vorschubgeschwindigkeit des Kunststoffprofils (nicht dargestellt) oder die Temperaturen der verschiedenen Extruderzonen (nicht dargestellt) oder Betriebszustände des Beschriftungslasers 1, auslesen als auch die Extruder 5 und den Beschriftungslaser 1 Steuern.

Wird mit der Extrusion begonnen, so wird mittels des Beschriftungslasers 1 zumindest eine erste Elementarlinie, bevorzugt ein erstes Kennzeichen, in diesem Beispiel ein Barcode 11, auf das Kunststoffprofil aufgebracht. Dabei wird die jeweilige Anzahl der Elementarlinien der einzelnen Linienelemente gespeichert, z.B. in der Maschinensteuerung 6. Ein entsprechender Barcode ist in Fig. 2 stark vergrößert dargestellt. Die Linienelmente wie 16 setzen sich aus überlappend aufgebrachten Elementarlinien wie 17 zusammen. Die einzelnen Elementarlinien 17 wiederum bestehen aus einer Reihe von Brennflecken 14, die als Kreise dargestellt sind wobei der Durchmesser der Kreise der Breite b der Brennflecke entspricht.

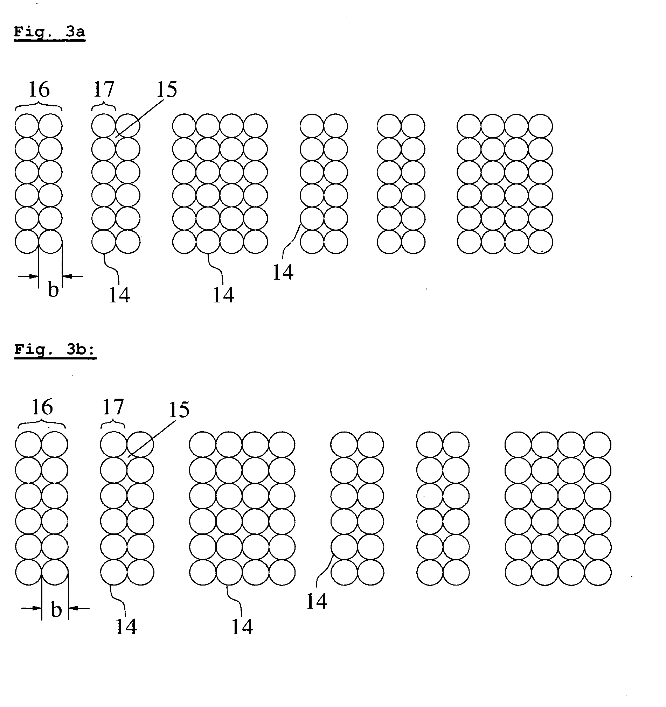

Anschließend werden die Linienelemente und die Elementarlinien des Barcodes durch den Scanner 3 vermessen und in Abhängigkeit von den Meßergebnissen wird die Breite der anschließend aufgebrachten Linienelemente so angepasst, dass sie sich nach der Breite der Brennflecke 14 der Elementarlinien 17 richtet. Dies ist in Fig. 3a bis 3c dargestellt. Fig. 3a bis 3c zeigen jeweils das gleiche Kennzeichen wie Fig. 2, jedoch Überlappen die die Brennflecke 14 darstellenden Kreise nicht, sondern grenzen aneinander an. Die Breite der Linienelemente 16 weicht daher von der Breite der entsprechenden Linienelemente in Fig.2 ab. In Fig. 3a sind die Brennflecke 14 in X-Richtung nebeneinander angeordnet, so daß bei festgelegter Anzahl der Elementarlinien 17 die Breite der Linienelemente 16 jeweils maximal wird. Verändert sich im Laufe des Produktionsprozesses, z.B. durch Temperatur- oder Materialveränderungen die Breite der Elementarlinien 17, so nimmt auch die Breite der Linienelemente 16 und bei Beibehaltung des Abstandes zwischen den Linienelementen 16 die Größe des Kennzeichens, hier des Barcodes, wie in Fig. 3b gezeigt, zu.

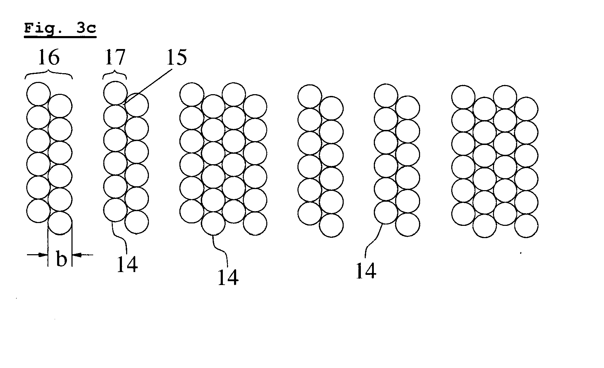

In Fig. 3c sind die Brennflecke 14 dichtest gepackt, d.h. die Mittelpunkte dreier zueinander jeweils benachbarter Brennflecke bilden ein gleichseitiges Dreieck mit der Seitenlänge b. Bei dieser Anordnung ist der Bereich 15 zwischen den Brennflecken 14 minimiert, und die Qualität des Linienelementes 16 entsprechend hoch.

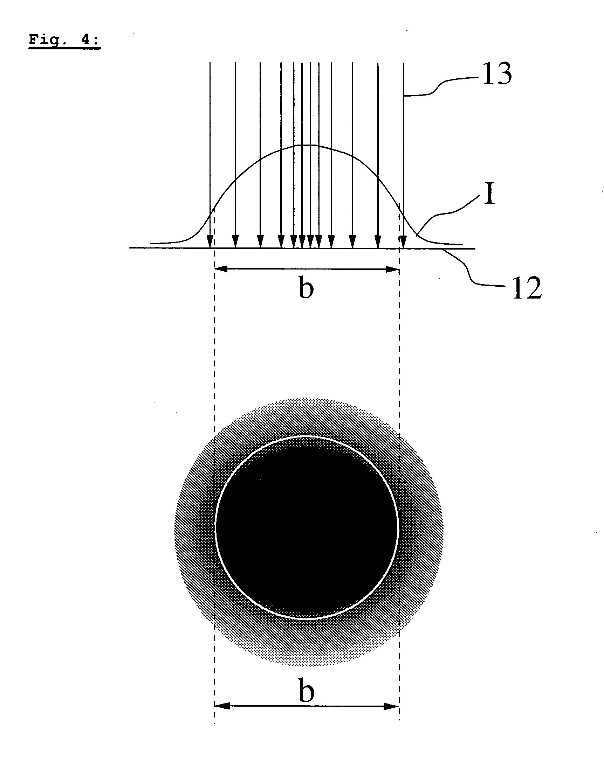

Anders als in Fig. 2 und Fig. 3 dargestellt sind die Brennflecken 14 entsprechend des verwendeten Kunststoffs oder Additiv eingefärbt, z.B. schwarz. Die Einfärbung ist in der Regel jedoch nicht homogen, sondern entspricht der Intensitätsverteilung des Laserstrahls 2. Dies wird anhand von Fig. 4 erläutert. Der Lichteinfall des Laserstrahls 2 wird durch die Pfeile 13 symbolisiert. Der zum Rand des Laserstrahls hin zunehmende Abstand zwischen den Pfeilen 13 symbolisiert eine zum Rand hin abnehmende Intensität I. Die Brennflecken haben daher eine dem durch die Kurve I angedeuteten Intensitätsverlauf entsprechende Einfärbung. Die Breite b eines Brennflecks wird durch eine zu wählende minimale Färbung des Brennflecks bestimmt. Unterhalb des durch eine Linie angedeuteten Kunststoffprofils 12 ist Brennfleck mit einer dem Intensitätsverlauf I entsprechenden Einfärbung, d.h. einer dem Intensitätsverlauf entsprechenden Farbintensität, abgebildet. Die Breite des Brennflecks ist dabei so gewählt, daß innerhalb des weißen Kreises die Farbintensität immer über einem vorbestimmten Grenzwert liegt. Der Grenzwert kann beispielsweise in Abhängigkeit eines zum späteren Lesen der Kennzeichens vorgesehenen Sensors gewählt werden.

Durch die in Fig. 4 gezeigte Intensitätsverteilung ist auch der Bereich 15 zwischen vier (vgl. Fig. 4a) bzw. drei (vgl. Fig. 4c) benachbarten Brennflecken 14 eingefärbt, denn auch außerhalb der gezeichneten Kreise gibt es eine Restintensität, die das Kunststoffprofil einfärbt (s. Fig.4). In den Bereichen 15 zwischen den vier bzw. drei Brennflecken superponiert die durch die Restintensität jeweiligen der Laserpulse zur Erzeugung der benachbarten Brennflecke 14 bewirkte Einfärbung des Kunststoffprofils, so dass der Bereich 15 eine Einfärbung erfährt, der einen Impuls mit der summierten Restintensität der zuvor genannten Laserpulse entspricht. Vorzugsweise wird die Breite b der Brennflecke 14 so gewählt, daß die mittlere summierte Restintensität in dem Bereich 15 zwischen benachbarten Brennflecken zumindest etwa gleich der Intensität eines Brennflecks auf der Kreisbahn um den Mittelpunkt des Brennflecks mit Radius b/2, d.h. der halben Breite, ist.

### Bezugszeichenliste

- 1: Beschriftungslaser
- 2: Laserstrahl
- 3: Sensor (z.B. Scanner)
- 4: Sensorstrahl
- 5: Extruder
- 6: Steuerung
- 7: Datenleitung: Steuerung <-> Beschriftungslaser
- 8: Datenleitung: Steuerung <-> Sensor
- 9: Datenleitung: Steuerung <-> Extruder
- 10: Barcode
- 11: Barcode
- 12: Kunststoffprofil
- 13: Lichteinfall
- 14: Brennfleck
- 15: Bereich zwischen benachbarten Brennflecken 14
- 16: Linienelement
- 17: Elementarlinie

- I: Intensität
- b: Breite

## Patentansprüche

1. Verfahren zum Herstellen eines Kunststoffprofils mit mindestens einem Kennzeichen aus mindestens einem Linienelement, mit dem Schritten:
a) Extrudieren eines Abschnittes eines Kunststoffprofils (12),
b) Aufbringen mindestens einer Elementarlinie (17), insbesondere eines Linienelementes (16) eines Kennzeichens mit einem gepulsten Beschriftungslaser (1), wobei die Elementarlinien (17) jeweils aus mit dem Beschriftungslaser (1) erzeugten Brennflecken (14) bestehen,
c) Vermessen der Breite der mindestens einen Elementarlinie,
d) Einstellen des Beschriftungslasers, so daß bei Aufbringen eines Kennzeichens mit einem Linienelement aus mindestens zwei Elementarlinien die Mittelpunkte zweier seitlich benachbarter Brennflecken um die Breite eines Brennflecks voneinander beabstandet sind.
e) Aufbringen eines Kennzeichens auf das Kunststoffprofil mit den Einstellungen gemäß Schritt d).

2. Verfahren nach dem Anspruch 1,
**dadurch gekennzeichnet, daß**
zumindest die Schritte c) bis e) wiederholt werden, wobei in Schritt c) mindestens ein Linienelement des zuletzt aufgebrachten Kennzeichens vermessen und die Breite der Elementarlinien des zuletzt aufgebrachten Kennzeichens gemessen wird.

3. Verfahren nach einem der vorstehenden Ansprüche,
**dadurch gekennzeichnet, daß**
während der Durchführung der Schritte a) bis e) kontiniuierlich extrudiert wird.

4. Verfahren nach einem der der vorstehenden Ansprüche,
**dadurch gekennzeichnet, daß**
in Schritt e) das Kennzeichen auf einen in der Zwischenzeit extrudierten Abschnitt des Kunststoffprofils aufgebracht wird.

5. Verfahren nach einem der vorstehenden Ansprüche,
**dadurch gekennzeichnet, daß**
in Schritt d) der Beschriftungslaser so eingestellt wird, daß die Brennflecke der zweiten und/oder einer folgenden Elementarlinie jeweils zwei Brennflecke einer benachbarten Elementarlinie tangieren.

6. Verfahren nach einem der vorstehenden Ansprüche,
**dadurch gekennzeichnet, dass**
vor Schnitt b) mindestens ein mit dem Beschriftungslaser beschriftbarer Streifen aufgebracht wird, entweder durch Coextrusion, Aufkleben oder Verschweißen.

7. Vorrichtung zur Herstellung eines Kunststoffprofils nach einem Verfahren gemäß einem der vorstehenden Ansprüche, umfassend einem Extruder zur Extrusion eines Kunststoffprofils und einem gepulsten Beschriftungslaser,
**dadurch gekennzeichnet, daß**
die Vorrichtung einen Sensor (3) zum Vermessen eines zuvor mit dem Beschriftungslaser (1) aufgebrachten Kennzeichens und eine Steuerung (6) hat, die in Abhängigkeit von den Messergebnissen den Beschriftungslaser beim Aufbringen mindestens eines nachfolgenden Kennzeichens steuert.

## Claims

1. Method for manufacturing a plastic section having at least one distinguishing mark consisting of at least one line element, comprising the steps of:
(a) extruding a length of a plastic section (12);
(b) applying at least one elementary line (17), in particular a line element (16) of a distinguishing mark using a pulsed marking-laser (1), with the elementary lines (17) each consisting of focal marks (14) formed by the marking-laser (1);
(c) measuring the width of the at least one elementary line;
(d) setting the marking-laser so that when a distinguishing mark having a line element consisting of at least two elementary lines is applied, the centre points of two laterally adjacent focal marks are spaced from each other by the width of a focal mark;
(e) applying a distinguishing mark onto the plastic section using the settings according to step (d).

2. Method according to claim 1,
**characterized in that**
at least the steps (c) to (e) are repeated, during which in step (c) at least one line element of the last applied distinguishing mark is measured and the width of the elementary lines of the last applied distinguishing mark is measured.

3. Method according to any one of the preceding claims,
**characterized in that**
extrusion is continuously effected during the performance of the steps (a) to (e).

4. Method according to any one of the preceding claims,
**characterized in that**
in step (e) the distinguishing mark is applied onto a plastic-section length that has been extruded in the meantime.

5. Method according to any one of the preceding claims,
**characterized in that**
in step (d) the marking-laser is adjusted so that the focal marks of the second and/or a subsequent elementary line each touch two focal marks of an adjacent elementary line.

6. Method according to any one of the preceding claims,
**characterized in that**
prior to step (b) at least one strip that can be marked with the marking-laser is applied, either by co-extrusion, adhesion or welding.

7. Device for manufacturing a plastic section by a method according to any one of the preceding claims, comprising an extruder for extruding a plastic section, and a pulsed marking-laser,
**characterized in that**
the device has a sensor (3) for measuring a distinguishing mark previously applied with the marking-laser (1), and a control means (6) which in dependence upon the measurement results controls the marking-laser during the application of at least one subsequent distinguishing mark.

## Revendications

1. Procédé pour la fabrication d'un profilé en plastique avec au moins un marquage qui consiste d'au moins un élément linéaire, comprenant les étapes de :
a) extrusion d'un tronçon d'un profilé en plastique (12),
b) application d'au moins une ligne élémentaire (17), en particulier d'un élément linéaire (16) d'un marquage avec un laser de marquage pulsé (1), les lignes élémentaires (17) se composant chacune de points brûlés (14) produits par le laser de marquage (1),
c) mesure de la largeur de l'au moins une ligne élémentaire,
d) réglage du laser de marquage de telle façon que lors de l'application d'un marquage avec un élément linéaire composé d'au moins deux lignes élémentaires, les centres de deux points brûlés voisins dans le sens latéral soient distants de la largeur d'un point brûlé ;
e) application d'un marquage sur le profilé en plastique avec les paramètres de l'étape d).

2. Procédé selon la revendication 1, **caractérisé en ce que** les étapes c) à e) au moins sont répétées, l'étape c) comprenant la mesure d'au moins un élément linéaire du dernier marquage appliqué et la mesure de la largeur des lignes élémentaires du dernier marquage appliqué.

3. Procédé selon l'une des revendications précédentes, **caractérisé en ce que** l'extrusion continue pendant l'exécution des étapes a) à e).

4. Procédé selon l'une des revendications précédentes, **caractérisé en ce que** dans l'étape e), le marquage est appliqué sur un tronçon du profilé en plastique extrudé dans l'intervalle.

5. Procédé selon l'une des revendications précédentes, **caractérisé en ce que** dans l'étape d), le laser de marquage est réglé de telle façon que les points brûlés de la deuxième ligne élémentaire et/ou d'une ligne élémentaire suivante soient tangents de deux points brûlés d'une ligne élémentaire voisine.

6. Procédé selon l'une des revendications précédentes, **caractérisé en ce qu'**avant l'étape b), au moins une bande pouvant être marquée avec le laser de marquage est appliquée, soit par coextrusion, soit par collage ou par soudage.

7. Dispositif pour la fabrication d'un profilé en plastique selon un procédé selon l'une des revendications précédentes, comprenant une extrudeuse pour l'extrusion d'un profilé en plastique et un laser de marquage pulsé, **caractérisé en ce que** le dispositif comprend un capteur (3) pour la mesure d'un marquage appliqué précédemment avec le laser de marquage (1) ainsi qu'une commande (6) qui commande le laser de marquage en fonction des résultats de mesure pour l'application d'au moins un marquage subséquent.
